# EUROPÄISCHE PATENTSCHRIFT

(11) **EP 1 984 242 B1**
(45) Veröffentlichungstag und Bekanntmachung des Hinweises auf die Patenterteilung: **09.11.2011**
(21) Anmeldenummer: 07856660.1
(22) Anmeldetag: 06.12.2007
(51) Int. Cl.: B64C 1/12, B64D 1/22, F41H 5/013

(54) **Schwingungsgedämpfte Befestigungsmittel für Einbauteile in Luftfahrzeugen und Fahrzeug mit solchen Befestigungsmitteln**
Oscillation-damping mounting means for fittings in aircraft and vehicle with such mounting means
Matériel de fixation amortissant pour des pièces d'installation pour avion et véhicule avec ce matériel de fixation

(30) Priorität: 06.12.2006 DE 202006018705 U
(43) Veröffentlichungstag der Anmeldung: 29.10.2008
(73) Patentinhaber: MKU GmbH, 27419 Sittensen (DE)
(72) Erfinder: STABENAU, Hans Günter, 27419 Sittensen (DE)
(74) Vertreter: Scholz, Hartmut
(86) Internationale Anmeldenummer: PCT/EP2007/010914
(87) Internationale Veröffentlichungsnummer: WO 2008/068045

(56) Entgegenhaltungen:
- DE-A1- 3 913 442
- DE-U1-202006 007 845
- FR-A- 2 779 901
- GB-A- 1 172 133
- US-A- 3 176 939
- US-A- 4 549 602

## Beschreibung

Die Erfindung betrifft ein Befestigungsmittel zur schwingungsgedämpften Befestigung von Einbauteilen an zellseitigen Befestigungspunkten einer Fahrzeugwandung einer Fahrzeugzelle, insbesondere eines Luftfahrzeugs zur Beförderung von Gütern und Personen, mittels elastischer Entkopplungselemente.

Luftfahrzeuge werden konstruktiv stets in so genannter Leichtbauweise hergestellt. Sie werden für die unterschiedlichsten Einsätze verwendet. Je nach Einsatz werden sie mit den unterschiedlichsten Einbauteilen ausgerüstet, beispielsweise werden Fluggastsitze, Einbauschränke, Krankentragen, Container oder Schutzverkleidungen eingebaut.

Diese Einbauteile sind üblicherweise biegesteifer als die Fahrzeugzelle, deren Materialien im Lastfall immer im elastischen Bereich angesiedelt sind. So biegt sich eine Tragfläche unter Belastung oft um mehrere Meter durch. Dies gilt grundsätzlich auch für Strukturelemente im Rumpfbereich. Die biegesteiferen Einbauteile werden mit lösbaren Befestigungsmitteln mit diesen elastischen Strukturelementen im Rumpfbereich verbunden.

Aus der DE 101 25 216 C2 ist dazu ein schnell lösbares Befestigungsmittel bekannt, bei dem pilzförmige Haltenasen in Hinterschneidungen von Befestigungsschienen im Fahrzeug eingesteckt werden. Die Befestigungsschienen sind üblicherweise fahrzeugseitig vorhanden, und die Befestigungsmittel können mit ihren pilzförmigen Haltenasen hinter Aussparungen benachbarter Vorsprünge geschoben werden. Ein ähnliches Befestigungssystem ist aus der DE 20 2006 007 845 U1 bekannt.

Die Einbauteile weisen eine andere Flexibilität als die Fahrzeugzelle auf. Luftfahrzeuge haben durch die Flexibilität ihrer Fahrzeugzelle eine relativ hohe Durchbiegung, und insbesondere Hubschrauber verformen sich bei Start und Landung elastisch sehr stark.

Die nachträglich eingebauten Einbauteile können dieser elastischen Verformung der Fahrzeugzelle nicht folgen und es kann an den Anker- oder Befestigungspunkten durch die horizontalen Scherbewegungen zu Stresskonzentrationen mit Spannungsspitzen kommen, die zu Materialermüdung und katastrophalen Rissen in der Fahrzeugzelle führen können.

Aus der US 4 549 602, welche den nächstliegenden Stand der Technik darstellt und den Oberbegriff des Anspruchs 1 offenbart, sind Einbauteile, nämlich Einbauschränke für empfindliche Geräte, bekannt, die elastisch von einer Fahrzeugzelle entkoppelt sind. Diese Entkoppelung erfolgt durch elastische Gummipuffer, die die vertikal oszillierenden Bewegungen eines Einbauschranks relativ zu einem Fahrzeug, insbesondere einem Luftfahrzeuges dämpfen. Scherkräfte durch Verschiebungen, die zu punktuellen Stressspitzen in der Fahrzeugzelle führen, werden dabei nicht vermieden.

Aus der GB 1 172 133 ist ein Mittel zur Entkopplung von Schwingungen, nämlich von Geräuschen mit Hilfe von Dämmmaterial. In der Fahrzeugzelle sind dazu gedämmte Aufnahmezapfen angeordnet, mit denen die Geräuschübertragung reduziert und so eine Geräuschdämmung erzielt werden soll. Stresskonzentrationen mit Spannungsspitzen kommen, die zu Materialermüdung und katastrophalen Rissen in der Fahrzeugzelle führen, können damit nicht vermieden werden.

Aus der US 3 176 939 ist es bekannt, metallische Dämpferelemente zwischen einer Fahrzeugzelle und eine aufzunehmenden Last anzuordnen. Scherkräfte können dabei nicht aufgenommen werden.

Aus der DE 39 13 442 ist es bekannt, auf ein Fahrzeug einwirkende Schockimpulse durch eine abgefederte Zusatzpanzerung zu verringern. Die Abfederung erfolgt dabei lediglich zweidimensional, nämlich in Auftreffrichtung des einwirkenden Schockimpulses. Stresskonzentrationen in der Fahrzeugzelle werden damit nicht vermieden.

Aufgabe der vorliegenden Erfindung ist es, Befestigungsmittel für Einbauteile in Luftfahrzeugen zu schaffen, mit denen Stresskonzentrationen mit Spannungsspitzen in den Befestigungspunkten in allen Richtungen vermieden werden, sowie ein Fahrzeug mit derartigen Befestigungsmitteln für Einbauteile in Luftfahrzeugen zu schaffen.

Gelöst wird diese Aufgabe durch die in dem Patentanspruch 1 angegebenen Merkmale. Vorteilhafte Ausführungsformen der Erfindung sind Gegenstand der Unteransprüche. Insbesondere wird diese Aufgabe dadurch gelöst, dass die Befestigungsmittel der elastischen Entkopplungselemente ein Spiel gegenüber den Einbauteilen aufweisen, so dass die Einbauteile relativ zu der Fahrzeugwandung verschiebbar sind.

Durch diese Maßnahmen werden nicht nur vertikale, also zweidimensionale auf und ab oszillierende Schwingungen von einem Einbauteil ferngehalten, sondern es werden auch in einer dritten Bewegungsrichtung auftretenden horizontale Scherbewegungen zwischen einem Einbauteil und der Fahrzeugwandung aufgenommen. Diese horizontalen Scherbewegungen, wie sie beispielsweise beim Starten oder Landen eines Hubschraubers durch die elastische Verformung der Fahrzeugzelle zwischen der Wandung der sich verformenden Fahrzeugzelle und einem biegesteiferen Einbauteil entstehen und zu Materialstresskonzentrationen führen können, werden vermieden.

Eine vorteilhafte Ausführung der Erfindung sieht vor, dass die elastischen Entkopplungselemente mit einen Bolzenschaft aufweisenden Befestigungsmitteln mit den Einbauteilen einerseits und mit den Befestigungspunkten andererseits wirkverbunden sind, wobei die Einbauteile Bohrungen aufweisen, durch die die Bolzenschäfte der Befestigungsmittel mit einem Spiel gegenüber der Innenwandung der Bohrungen geführt sind.

Durch dieses Spiel zwischen dem Bolzenschaft und der Innenwandung der Bohrung kann der Bolzenschaft bei Scherbewegungen horizontal ausweichen, und das Einbauteil kann sich gegen die Federkraft der Entkopplungselemente horizontal verschieben. Scherkräfte und Stresskonzentrationen durch sich verbiegendes Material der Fahrzeugzelle werden vermieden. Dabei kommt es zu einer progressiven Verformung der Entkopplungselemente, die die Scherbewegung zwischen einem Einbauteil und der Fahrzeugwandung aufnehmen. Die auftretenden Scherkräfte werden gedämpft und von der Fahrzeugzelle ferngehalten.

Die Einbauteile, beispielsweise ballistische Schutzeinbauten, sind dadurch gemäß der Erfindung dreidimensional nachgiebig mit dem Fahrzeug, vorzugsweise einem Luftfahrzeug, verbunden. Durch diese Maßnahme können Fahrzeugzellen mit Einbauteilen versehen werden, die relativ biegesteif sind, ohne dass es zu Stresskonzentrationen im dem sich verbiegenden Material der Fahrzeugzelle kommt.

Bei dynamischer Belastung der Fahrzeugzelle können sich die Einbauteile in ihren Befestigungspunkten relativ zu der jeweiligen Fahrzeugzellenwand bewegen und ausweichen. Die Relativverschiebungen bewegen sich zwar nur im Millimeterbereich, sie können aber zu Spannungsspitzen und Stresskonzentrationen im Material führen. Durch die erfindungsgemäßen Maßnahmen werden solche Stresskonzentrationen in den Zellwänden vorteilhaft vermieden und einer Materialermüdung wird vorgebeugt.

Eine bevorzugte Ausführungsform der Erfindung betrifft die Fahrzeugzelle, insbesondere die eines Luftfahrzeugs, bei der es vorgesehen ist, die Einbauteile mit dreidimensional nachgiebigen, elastischen Entkopplungselementen verschiebungs- und schwingungsgedämpft mit der Fahrzeugzelle zu verbinden. Die Einbauteile können auch nachträglich in eine Fahrzeugzelle eingebaut werden.

Die Befestigung erfolgt elastisch an Befestigungspunkten mit der Fahrzeugzelle des Fahrzeugs, nämlich eines Luftfahrzeuges. Die dreidimensionalen Verformungen einer Luftfahrzeugzelle können ohne Weiterleitung an die Einbauteile erfolgen.

Die erfindungsgemäße Fahrzeugzelle für ein Luftfahrzeug weist Einbauteile auf, die über elastische Entkopplungselemente an fahrzeugeigenen Bodenschienen einbaubar sind, wobei die fahrzeugeigenen Bodenschienen elastisch mit der Fahrzeugzelle verbunden sind. Umgekehrt können auch Befestigungsschienen an luftfahrzeugeigenen Ankerpunkten elastisch festgelegt werden. Somit sind keine zusätzlichen Umbaumaßnahmen an der Fahrzeugzelle notwendig, durch die die für die Fahrzeugzelle erteilte Betriebsgenehmigung erhalten bleibt. Hierdurch lässt sich eine Vielzahl von Einbauteilen nachträglich in eine Fahrzeugzelle einbauen, ohne dass diese durch mechanische Belastung frühzeitig beschädigt wird.

In einer weiteren vorteilhaften Ausführungsform der erfindungsgemäßen Fahrzeugzelle sind die Einbauteile ballistische Schutzeinbauten, insbesondere Hartschutzplatten.

In einer weiteren besonders vorteilhaften Ausführungsform der erfindungsgemäßen Fahrzeugzelle sind die ballistischen Schutzeinbauten ballistische Platten aus Laminaten, Kompositen, Aramiden oder Polyethylenen.

Gemäß einer vorteilhaften Ausführungsform der erfindungsgemäßen Fahrzeugzelle können die Einbauteile, beispielsweise Kabinen, Küchen, Racks für Normeinbauten usw., nachträglich in eine Fahrzeugzelle eingebaut und elastisch mit dieser verbunden werden. Hierdurch kann praktisch jede Fahrzeugzelle schnell und kostengünstig an den jeweiligen Einsatzzweck angepasst werden, ohne dass sie dabei verändert werden müsste. Die Einbauteile lassen sich einfach und schnell ein- und ausbauen.

In einer besonders bevorzugten Ausführungsform der erfindungsgemäßen Fahrzeugzelle können elastische Außenlastbefestigungen zur Aufnahme von Außenlasten vorgesehen sind, wobei diese Außenlastbefestigungen dreidimensional schwingungsgedämpft relativ zur jeweiligen Fahrzeugwandung verschiebbar sind. Eine Außenlast kann schwingungsgedämpft mit der Fahrzeugzelle verbunden werden. Dadurch werden auch auf die Fahrzeugzelle einwirkende Schwingungsgeräusche in vorteilhafter Weise gedämmt und nicht auf die Einbauteile übertragen.

Gemäß einer besonders bevorzugten Ausführungsform der erfindungsgemäßen Fahrzeugzelle können die elastischen Außenlastbefestigungen als Gummi-Metallelemente ausgebildet sein und mit der Fahrzeugzelle verbunden werden. Derartige Gummi-Metallelemente sind besonders geeignet, in die Fahrzeugzelle eingetragene Schwingungskräfte zu absorbieren oder zumindest so zu verringern, dass Spannungsspitzen vermieden werden.

Gemäß der Erfindung ist das Fahrzeug ein Luftfahrzeug, insbesondere ein Hubschrauber.

Die Erfindung wird im Folgenden anhand von beispielhaften Ausführungsformen unter Bezugnahme auf die beigefügten Zeichnungen näher erläutert. Es zeigt:
- **Figur 1**: die schematische Seitenansicht eines Luftfahrzeugs, nämlich eines Hubschraubers, mit unbelasteter Fahrzeugbodenplatte, mit nach dem Abheben durch die Zugkraft des Rotors in Zugrichtung konvex nach oben gebogener Fahrzeugbodenplatte und mit durch eine Außenlast konkav nach unten gebogener Fahrzeugbodenplatte;
- **Figur 2**: die isometrische Darstellung einer Luftfahrzeugzelle mit im Bereich der Fahrzeugbodenplatten vorgesehenen Halteelementen zum Nachrüsten mit Einbauteilen;
- **Figur 3**: die schematische Darstellung der Befestigung von Einbauteilen, mit an verschiedenen zellseitigen Befestigungspunkten vorgesehenen erfindungsgemäßen, elastischen Befestigungsmitteln, mit Stresskonzentrationen in der Fahrzeugbodenplatte, beispielsweise eines Hubschraubers, durch Krafteinwirkungen;
- **Figur 4**: die Detaildarstellung der Befestigung von Einbauteilen an der Fahrzeugzelle eines Fahrzeuges mit schematischer Darstellung der Durchbiegung der Zellstruktur;
- **Figur 5**: die Detaildarstellung einer Befestigung nach Figur 4, mit einem Halteelement und zwischen gelegten, dreidimensional elastischen Entkopplungselementen;
- **Figur 6**: die Detaildarstellung einer Befestigung eines Einbauteils, mit einem zweiten Befestigungsmittel und einem weiteren Halteelement für ein weiteres Einbauteil, mit zwischen gelegten, elastischen Entkopplungselementen nach Figur 4;
- **Figur 7**: die Detaildarstellung eines elastischen Entkopplungselements, das aus einer Doppelscheibe besteht und einer Abdeckung für eine Einsenkung.

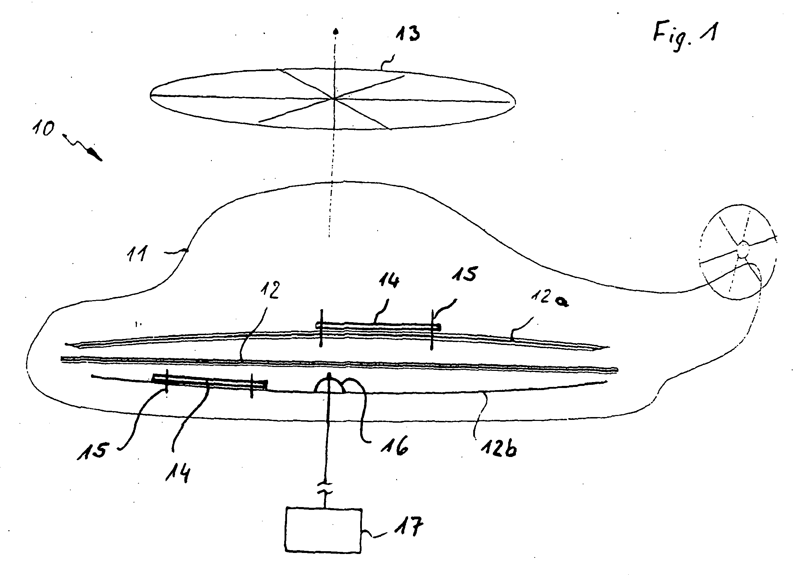

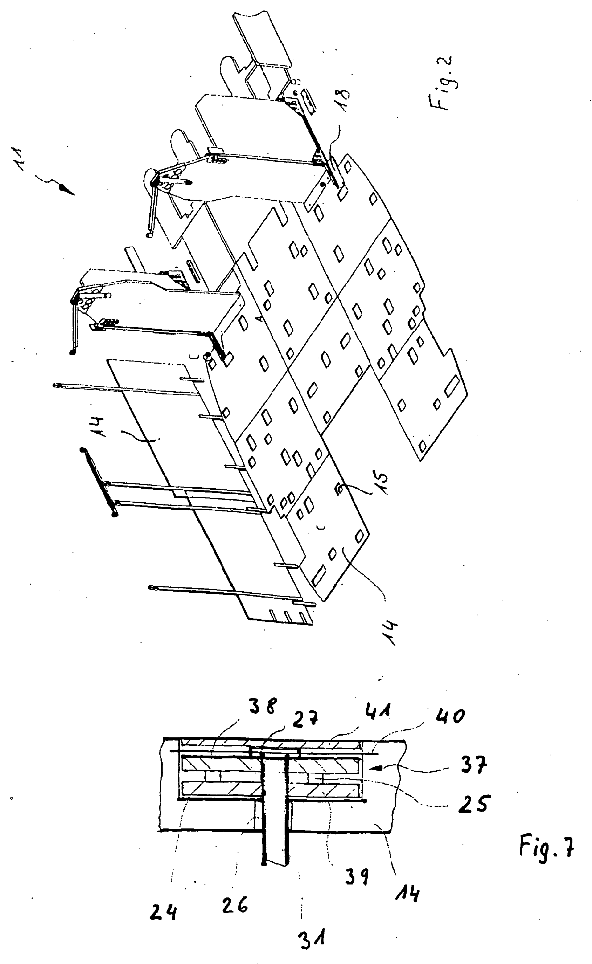

Das in der Figur 1 schematisch dargestellte Luftfahrzeug 10, beispielsweise ein Hubschrauber, besteht aus einer Fahrzeugzelle 11, wie sie beispielsweise in der Figur 2 schematisch dargestellt ist.

Die in der Figur 1 dargestellte Fahrzeugzelle 11 weist in Ruhe eine ebene, elastische Fahrzeugbodenplatte 12 auf. An den Wänden der Fahrzeugzelle 11, hier beispielhaft nur anhand der Fahrzeugbodenplatte 12 dargestellt, können nachträglich die unterschiedlichsten Einbauteile 14 eingebaut und befestigt werden. So können sie beispielsweise mit Fluggastsitzen, Einbauschränken, Krankentragen oder Containern ausgerüstet oder mit ballistischen Schutzverkleidungen armiert werden. Ballistische Einbauteile 14 können beispielsweise ballistische Platten sein, die aus Laminaten, Kompositen, Aramiden oder Polyethylenen und dergleichen bestehen.

Diese Einbauteile 14 sind üblicherweise biegesteifer als die Fahrzeugzelle 11, deren Material im Lastfall immer im elastischen Bereich liegt. Sie weisen dadurch ein anderes dynamisches Verhalten als die Fahrzeugzelle 11 auf. Wird das Luftfahrzeug 10, beispielsweise ein Hubschrauber, gestartet oder gelandet, d. h. mittels seines Rotors 13 angehoben oder abgesetzt, so verformt sich die Fahrzeugzelle 11 elastisch. Dadurch kommt es zu Relativbewegungen zwischen den Einbauteilen 14 und der Fahrzeugzelle 11.

Startet ein Hubschrauber 10, so hebt sein Rotor 13 die Fahrzeugzelle 11 an, wodurch sie eine konvexe flugbelastete Fahrzeugbodenplatte 12a erhält. Die an zellseitigen Befestigungspunkten 15 befestigten Einbauteile 14 können sich dabei geringfügig relativ zu der Fahrzeugbodenplatte 12a verschieben.

Mit einem Hubschrauber 10 werden häufig auch an Außenlastbefestigungen 16 eingehängte Außenlasten 17 transportiert. Beim Anheben einer solchen Außenlast 17 verformt sich die Fahrzeugzelle 11, wodurch sie eine konkave außenbelastete Fahrzeugbodenplatte 12b erhält. Auch hierbei verschieben sich die an den zellseitigen Befestigungspunkten 15 befestigten, biegesteifen Einbauteile 14 relativ zu der Fahrzeugbodenplatte 12b.

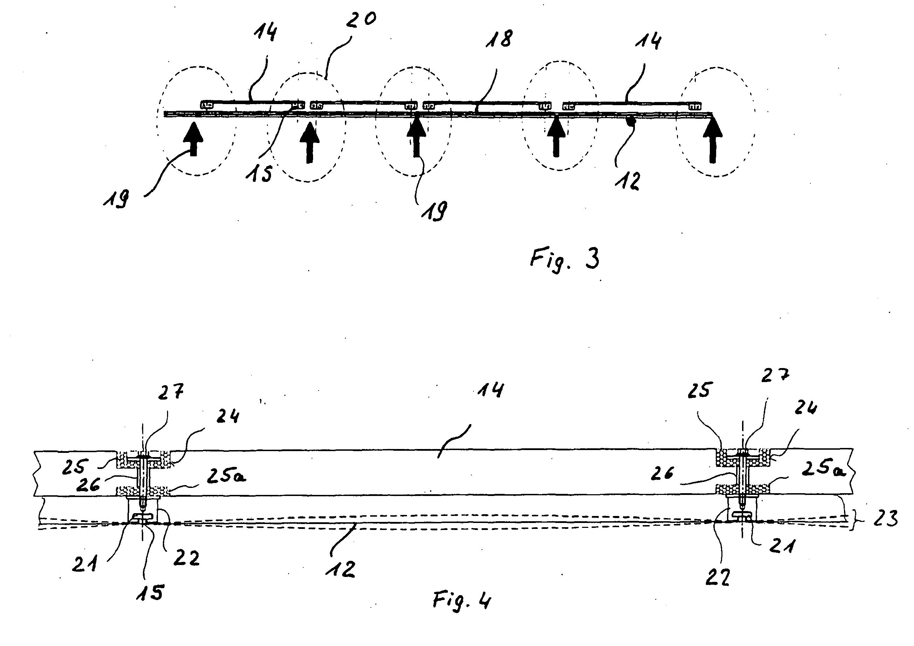

Die in der Figur 3 schematisch dargestellte ebene Fahrzeugbodenplatte 12 einer Luftfahrzeugzelle 11 ist mit einer Vielzahl von zellseitigen Befestigungspunkten 15 versehen. Über diese zellseitigen Befestigungspunkte 15, die sich auch in oder auf zellseitigen Bodenschienen 18 befinden können, werden die Einbauteile 14 mit der Fahrzeugbodenplatte 12 oder den Fahrzeugseitenwände verbunden.

Startet oder landet der Hubschrauber 10, so biegt sich die Fahrzeugbodenplatte 12 konvex oder konkav. Die biegesteifen Einbauteile 14 verschieben sich durch die übertragenen Kräfte 19 relativ zu der Fahrzeugbodenplatte 12. Die zellseitigen Befestigungspunkte 15 können dieser Relativbewegung nicht folgen.

Diese Relativbewegungen bewegen sich zwar nur im Millimeter- bis Zentimeterbereich, trotzdem können sie im Bereich der Befestigungspunkte 15 zu Spannungsspitzen und zu Stresskonzentrationen 20 im Material der Fahrzeugzelle 11 führen. Derartige Stresskonzentrationen 20 können zu Materialermüdungen und zu katastrophalen Rissen in der Fahrzeugzelle 11 führen.

Wie die Figur 4 zeigt, sind gemäß der Erfindung elastische Entkopplungselemente 25 und 25a vorgesehen, um Relativbewegungen zwischen nachträglich vorgenommenen Einbauteilen 14 und dadurch bedingten Stresskonzentrationen 20 zu vermeiden.

Den zellseitigen Befestigungspunkten 15 sind Befestigungsmittel 21 zugeordnet. Die elastischen Entkopplungselemente 25 und 25a können beispielsweise Gummi-Metallelemente, Elastomere, Gummidämpfer oder dergleichen sein, die zugleich auch schwingungsbedingte Geräusche in der Fahrzeugzelle 11 dämpfen. Es sind auch dauerelastische Klebungen oder elastische Klettverschlüsse aus Flausch- und Hakenbändern möglich, mit denen die Einbauteile 14 mit einer Fahrzeugzelle 11 verbunden werden können. Solche dauerelastischen Klebungen können kurzfristige Dehnungen von bis zu 500 % aufnehmen.

Die Befestigungsmittel 21 können beispielsweise sog. Haltepilze sein, wie sie allgemein bekannt sind. Die elastischen Entkopplungselemente 25 und 25a sind mit Halteelementen 22 an den Haltepilzen 21 der zellseitigen Befestigungspunkte 15 lösbar festgelegt.

Durch die elastischen Entkopplungselemente 25 und 25a kann sich die Fahrzeugbodenplatte 12 bei einer Durchbiegung der Zellstruktur 23 dreidimensional relativ zu den biegesteifen Einbauteilen 14 bewegen. Materialermüdungen mit katastrophalen Rissbildungen durch Stresskonzentrationen 20 werden so vermieden.

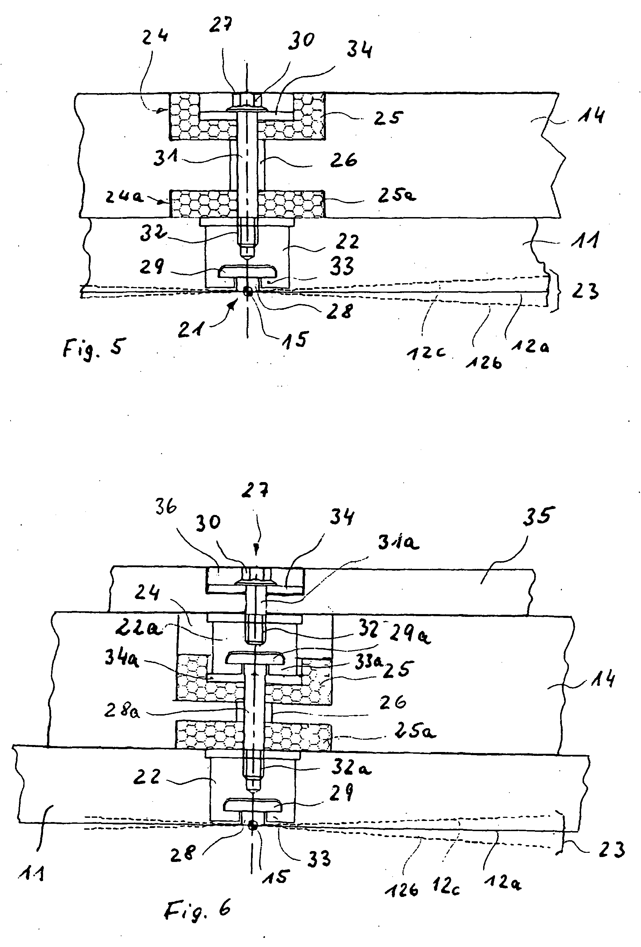

Wie die Figur 5 im Detail zeigt, ist das Einbauteil 14, beispielsweise eine ballistische Schutzplatte, zu ihrer Befestigung an der Bodenplatte 12 einer Fahrzeugzelle 11 mit einer Vielzahl von Einsenkungen 24 bzw. 24a versehen. Bei dem gezeigten Ausführungsbeispiel sind den innenraumseitigen Einsenkungen 24 gegenüberliegend an der Unterseite des Einbauteils 14 Einsenkungen 24a vorgesehen.

Die Einsenkungen 24 bzw. 24a werden in Einbaulage direkt über die zellseitigen Befestigungspunkte 15 gebracht. In eine Einsenkung 24 ist ein elastisches Entkopplungselement 25 eingelegt und in die gegenüberliegende Einsenkung 24a ist ein Entkopplungselement 25a eingelegt.

Durch die elastischen Entkopplungselemente 25 und 25a sowie die einzubauende Schutzplatte 14 ist eine Bohrung 26 geführt. Durch diese Bohrung 26 ist der Bolzenschaft 31 eines Befestigungsmittels 27, beispielsweise eines Haltebolzens oder einer Schraube geführt. Der Bolzenschaft 27 weist ein Spiel zu der Innenwandung der Bohrung 26 auf, um dreidimensionale Schwingungen aufnehmen und auf die Entkopplungselemente 25 und 25a übertragen zu können.

Der Haltebolzen 27 weist einen Bolzenkopf 30 auf, der über ein Lastverteilungselement 34 auf dem elastischen Entkopplungselement 25 aufliegt.

An seinem dem Bolzenkopf 30 entgegen gesetzten freien Ende ist der Bolzenschaft 31 mit einem Schraubgewinde 32 versehen. Der Bolzenschaft 31 kann mit einem Halteelement 22 lösbar verbunden werden, beispielsweise kann er mit dem Schraubgewinde 32 in das Halteelement 22 eingeschraubt werden.

Das Halteelement 22 ist auf seiner der Fahrzeugbodenplatte 12 zugewandten Seite mit einer Halteklaue 33 versehen. Die Halteklaue 33 kann mit einem als Haltepilz ausgebildeten zellseitigen Befestigungsmittel 21 in Wirkverbindung gebracht werden. Die Halteklaue 33 kann unter den Pilzkopf 29 des Haltepilzes 21 geschoben und mit einer nicht dargestellten Verriegelung in ihrer Position festgelegt werden.

Der Haltepilz 21 besteht aus einem Pilzkopf 29 und einem Pilzschaft 28, mit dem er an dem zellseitigen Befestigungspunkt 15 festgelegt ist. Zur Befestigung eines Einbauteils 14 wird der Bolzenschaft 31 des Haltebolzens 27 durch die elastischen Entkopplungselemente 25 und 25a und die Bohrung 26 bis in den Bereich des Halteelementes 22 geführt. Ist der Haltebolzen 27 mit einem Schraubgewinde 32 versehen, so kann er in das Halteelement 22 eingeschraubt und variabel verspannt werden.

Beim Spannen greift die Halteklaue 33 unter den Haltepilz 21, und der Bolzenkopf 30 liegt auf dem Lastverteilungselement 34 des oberen elastischen Entkopplungselements 25 auf. Das untere elastische Entkopplungselement 25a liegt auf dem Halteelement 22 auf.

Die Federrate der elastischen Entkopplungselemente 25 und 25a kann durch die Spannvorrichtung variabel eingestellt werden. Nach Erreichen der Verriegelung und der gewünschten Federrate kann die Spannvorrichtung mittels eines Sperrmittels 40 arretiert gesichert werden.

Bei der Ausführung gemäß der Figur 6 ist erfindungsgemäß ein weiteres Halteelement 22a vorgesehen. Das weitere Halteelement 22a greift mit Halteklauen 33a unter einen weiteren Pilzkopf 29a. Der weitere Pilzkopf 29a ist mit einem weiteren, verlängerten Pilzschaft 28a einstückig verbunden. Der verlängerte Pilzschaft 28a verläuft durch eine Bohrung 26 im Einbauteil 14 und durch die elastischen Entkopplungselemente 25 und 25a und ist an seinem unteren freien Ende mit einem weiteren Schraubgewinde 32a versehen.

Mit dem Schraubgewinde 32a kann der verlängerte Pilzschaft 28a mit dem Halteelement 22 der Fahrzeugzelle 11 verbunden werden. Beispielsweise kann der verlängerte Pilzschaft 28a in das Halteelement 22 eingeschraubt werden.

Das obere, weitere Halteelement 22a liegt mit einem Lastverteilungselement 34a auf dem oberen elastischen Entkopplungselement 25 auf. Es schließt an seiner Oberseite mit dem eingebauten biegesteifen Einbauteil 14, beispielsweise einer ballistischen Schutzplatte, bündig ab. An diesem weiteren Pilzkopf 29a können weitere Einbauteile 35, beispielsweise Schränke, Sitze usw., kaskadenförmig auf einer biegesteifen ballistischen Schutzplatte 14 befestigt werden.

Das weitere Einbauteil 35 ist auf seiner der biegesteifen ballistischen Schutzplatte 14 abgewandten Seite mit einer Einsenkung 36 versehen. In die Einsenkung 36 ist ein Lastverteilungselement 34 eingelegt. Durch die Einsenkung 36 und das Lastverteilungselement 34 ist ein Bolzenschaft 31a eines Haltebolzens 27 geführt.

Der Haltebolzen 27 ist an seinem unteren freien Ende mit einem Schraubgewinde 32 versehen, mit dem er mit dem Halteelement 22a in der Einsenkung 24 der ballistischen Schutzplatte 14 verbunden werden kann. Beispielsweise kann der in das Halteelement 22a eingeschraubt und mit nicht näher dargestellten Sperrmitteln gesichert werden. An dem weiteren Haltepilz 29a können so beliebige nicht näher dargestellte Einbauteile 14 befestigt werden. Auch diese Einbauteile 14 sind durch die elastischen Entkopplungselemente 25 und 25a dreidimensional von den Schwingungen der Fahrzeugzelle 11 abgekoppelt.

Wie die Figur 7 zeigt, können die elastischen Entkopplungselemente 25 auch zwischen einer Doppelscheibe 37 angeordnet sein, die in die genannten Einsenkungen 24 eines Einbauteils 14 eingelegt werden können. Diese Doppelscheiben 37 bestehen aus einer Oberscheibe 38 und einer Unterscheibe 39, zwischen denen eine Vielzahl von kleinen, nicht miteinander verbundenen elastischen Entkopplungselementen 25 vorgesehen ist.

Auch kann ein ringförmig ausgebildetes, elastisches Entkopplungselement 25 vorgesehen sein. Die elastischen Entkopplungselemente 25 bzw. die Doppelscheiben 37 können durch eine Abdeckung 41 abgedeckt werden oder bündig mit der Oberkante des jeweiligen Einbauteils 14 abschließen.

Die Doppelscheiben 37 werden, wie oben beschrieben, mit in Bohrungen 26 durch das Einbauteil 14 geführten Befestigungsmitteln 27 mit hier nicht dargestellten Halteelementen 22 bzw. 22a verbunden. Danach werden die Befestigungsmittel 27 arretiert und mit Sperrmitteln 40 gesichert. Die Befestigungsmittel 27 haben ein ausreichendes Spiel zu den Bohrungen 26, um dreidimensionale Schwingungen aufnehmen zu können.

## Patentansprüche

1. Befestigungsmittel zur schwingungsgedämpften Befestigung von Einbauteilen (14) an zellseitigen Befestigungspunkten (15, 29) einer Fahrzeugwandung (12) einer Fahrzeugzelle (11), insbesondere eines Luftfahrzeugs zur Beförderung von Gütern und Personen, mittels elastischer Entkopplungselemente (25, 25a), **dadurch gekennzeichnet, dass** die Befestigungsmittel (27) der elastischen Entkopplungselemente (25, 25a) ein Spiel gegenüber den Einbauteilen (14) aufweisen, so dass die Einbauteile (14) relativ zu der Fahrzeugwandung (12) verschiebbar sind.

2. Befestigungsmittel nach Anspruch 1, **dadurch gekennzeichnet, dass** die elastischen Entkopplungselemente (25, 25a) mit einen Bolzenschaft (31) aufweisenden Befestigungsmitteln (27) mit den Einbauteilen (14) einerseits und mit den Befestigungspunkten (15, 29) andererseits wirkverbunden sind, wobei die Einbauteile (14) Bohrungen (26) aufweisen, durch die die Bolzenschäfte (31) der Befestigungsmittel (27) mit einem Spiel gegenüber der Innenwandung der Bohrungen (26) geführt sind.

3. Befestigungsmittel nach den Ansprüchen 1 und 2, **dadurch gekennzeichnet, dass** die Befestigungsmittel (27) über Lastverteilungselemente (34, 34a) mit den elastischen Entkopplungselementen (25) in Wirkverbindung bringbar sind.

4. Befestigungsmittel nach den Ansprüchen 1 bis 3, **dadurch gekennzeichnet, dass** die Federrate der elastischen Entkopplungselemente (25, 25a) über Lastverteilungselemente (34, 34a) mittels der Befestigungsmittel (27) variabel einstellbar ist.

5. Befestigungsmittel nach den Ansprüchen 1 bis 4, **dadurch gekennzeichnet, dass** die elastischen Entkopplungselemente (25, 25a) über die Befestigungsmittel (27) mit Halteelementen (22, 22a) verbindbar sind, die mit fahrzeugseitigen Befestigungsmitteln (21) in Wirkverbindung bringbar sind.

6. Befestigungsmittel nach Anspruch 5, **dadurch gekennzeichnet, dass** die Halteelemente (22, 22a) Halteklauen (33) aufweisen, mit denen sie mit den fahrzeugseitigen Befestigungsmitteln (21) in Wirkverbindung bringbar sind.

7. Befestigungsmittel nach den Ansprüchen 5 und 6, **dadurch gekennzeichnet, dass** die Halteelemente (22, 22a) mittels Sperrmitteln (40) arretier- und lagefixierbar sind.

8. Befestigungsmittel nach einem oder mehreren der vorhergehenden Ansprüche, **dadurch gekennzeichnet, dass** weitere Halteelemente (22a) vorgesehen sind, die mit weiteren Befestigungsmitteln (29a) in wirkverbindung bringbar sind, die weiteren Befestigungsmittel (29a) mit verlängerten Bolzenschäfte (28a) einstückig verbunden sind, die mit einem Spiel zu der Innenwandung durch Bohrungen (26) in dem Einbauteil (14) verlaufen und mit den ersten Halteelementen (22) der Fahrzeugzelle (11) verbindbar sind.

9. Befestigungsmittel nach Anspruch 8, **dadurch gekennzeichnet, dass** die weitere Halteelemente (22a) auf elastischen Entkopplungselementen (25) aufliegen und in Einbaulage mit der Oberseite eines eingebauten biegesteifen Einbauteils (14) bündig abschließen.

10. Befestigungsmittel nach den Ansprüchen 8 und 9, **dadurch gekennzeichnet, dass** an den weiteren Befestigungsmitteln (29a) weitere Einbauteile (35) auf einer biegesteifen ballistischen Schutzplatte (14) festlegbar sind.

11. Befestigungsmittel nach einem oder mehreren der vorhergehenden Ansprüche, **dadurch gekennzeichnet, dass** die elastischen Entkopplungselemente (25) punktförmig zwischen einer aus einer Oberscheibe (38) und einer Unterscheibe (39) bestehende Doppelscheibe (37) angeordnet sind und die Doppelscheiben (37) mittels Befestigungsmitteln (27) mit zellseitigen Halteelementen (22, 22a) verbindbar sind.

12. Befestigungsmittel nach einem oder mehreren der vorhergehenden Ansprüche für Einbauteile (14) an zellseitig vorhandenen Befestigungspunkten (15) einer Fahrzeugzelle (11) eines Fahrzeugs (10), **dadurch gekennzeichnet, dass** die Einbauteile (14) ballistische Schutzeinbauten, Schutzverkleidungen, Befestigungs- oder Transportrahmen für zu transportierende Geräte und dergleichen sind.

13. Fahrzeug nach Anspruch 12, **dadurch gekennzeichnet, dass** die Einbauteile (14) ballistische Schutzplatten aus Laminaten, Kompositen, Aramiden oder Polyethylenen sind.

14. Fahrzeug nach Anspruch 12 und 13, **dadurch gekennzeichnet, dass** die Einbauteile (14) über elastische Entkopplungselemente (25, 25a) an fahrzeugeigenen Bodenschienen (18) in der Fahrzeugzelle (11) einbaubar sind.

15. Fahrzeug nach Anspruch 14, **dadurch gekennzeichnet, dass** die fahrzeugeigenen Bodenschienen (18) elastisch mit der Fahrzeugzelle (11) verbunden sind.

16. Fahrzeug nach den Ansprüchen 12 und 13, **dadurch gekennzeichnet, dass** die Einbauteile (14) über dauerelastische Klebungen oder über elastische Klettverschlüsse aus Flausch- und Hakenbändern mit der Fahrzeugzelle (11) verbunden sind.

17. Fahrzeug nach einem oder mehreren der vorhergehenden Ansprüche 1 bis 11, **dadurch gekennzeichnet, dass** elastische Außenlastbefestigungen (16) zur Aufnahme von Außenlasten (17) vorgesehen sind, wobei die Außenlastbefestigungen (16) dreidimensional schwingungsgedämpft relativ zur jeweiligen Fahrzeugwandung (12) verschiebbar sind.

## Claims

1. A fastening assembly for the vibration-damped mounting of build-in parts (14) by means of elastic decoupling elements (25, 25a) at body-side mounting locations (15, 29) of a wall (12) of the body or frame (11) of a vehicle, particularly of aircraft for transporting goods and persons, **characterized by** fastening device (27) of said elastic decoupling elements (25, 25a) disposed at a clearance from built-in parts (14), allowing the latter to shift relative to vehicle wall (12).

2. Fastening assembly as claimed in claim 1, **characterized in that** elastic decoupling elements (25, 25a) are connected by fastening devices (27) with built-in parts (14) on the one hand and with mounting locations (15, 29) on the other hand for operative interaction therewith, each said fastening devices comprising a shank (31), and said built-in parts (14) having bores (26) therethrough to receive shanks (11) of fastening devices (27) with some clearance from the inner walls of bores (26).

3. Fastening assembly as claimed in claims 1 and 2, **characterized in that** fastening devices (27) are adapted to be brought into operative interaction with said elastic decoupling elements (25) via load distributing elements (34, 34a).

4. Fastening assembly as claimed in claims 1 to 3, **characterized in that** the spring rate of said elastic decoupling elements (25, 25a) is adjustable variably via said load distributing elements (34, 34a) by means of fastening devices (27).

5. Fastening assembly as claimed in claims 1 to 4, **characterized in that** elastic decoupling elements (25, 25a) are adapted to be connected with holding elements (22, 22a) via fastening devices (27).

6. Fastening assembly as claimed in claim 5, **characterized in that** holding elements (22, 22a) comprise holding claws (33) adapted to bring them into operative interaction with said vehicle-side fastening elements (21).

7. Fastening assembly as claimed in claims 5 and 6, **characterized in that** holding elements (22, 22a) are adapted to be secured in place and in position by locking means (40).

8. Fastening assembly as claimed in any one ore more of the preceding claims, **characterized by** additional holding elements (22a) provided to be brought into operative interaction with additional fastening elements (29a), and by said additional fastening elements (29a) being integrally connected with extended shanks (28a) received through bores (26) in built-in part (14) with some clearance to the inner walls thereof and adapted to be connected with said first holding elements (22) of vehicle body (11).

9. Fastening assembly as claimed in claim 8, **characterized in that** said additional holding elements (22a) engage elastic decoupling elements (25) and, in their installed position, terminate flush with the top surface of a flexurally rigid built-in part (14).

10. Fastening assembly as claimed in claims 8 and 9, **characterized in that** said additional fastening elements (29a) are adapted to have additional build-in parts (35) secured thereto on a flexurally rigid ballistic protection panel (14).

11. Fastening assembly as claimed in one or more of the preceding claims, **characterized in that** said elastic decoupling elements (25) are disposed in point fashion between dual-disk assemblies (37) each comprising a top disk (38) and a bottom disk (39), said dual-disk assemblies (37) adapted to be connected with body-side holding elements (22, 22a) by fastening devices (27).

12. Fastening assembly as claimed in one or more of the preceding claims for build-in parts (14) to be attached at fastening sites (15) on the body (11) of a vehicle (10), **characterized in that** said build-in parts (14) comprise ballistic protection elements, protective panels, mounts or racks for equipment to be transported, and the like.

13. A vehicle as claimed in claim 12, **characterized in that** said build-in parts (14) comprise ballistic protective panels of laminate, composite, aramide or polyethylene.

14. Vehicle as claimed in claims 12 and 13, **characterized in that** build-in parts (14) are adapted to be mounted via elastic decoupling elements (25, 25a) on on-board floor rails (18) in vehicle body (11).

15. Vehicle as claimed in claim 14, **characterized in that** said on-board floor rails (18) are connected elastically with vehicle body (11).

16. Vehicle as claimed in claims 12 and 13, **characterized in that** built-in parts (14) are connected with vehicle body (11) via permanently elastic adhesive bonds or elastic thistle-cloth fasteners comprising hook sheets and pile sheets.

17. Vehicle as claimed in any one or more of the preceding claims 1 to 11, **characterized by** elastic exterior load mounts (16) adapted to receive exterior loads (17), said exterior load mounts (16) vibration-damped three-dimensionally relative to the respective vehicle wall (12).

## Revendications

1. Moyen de fixation pour la fixation amortissant les vibrations des éléments de montage (14) à des points de fixation (15, 29) au côté de la carcasse d'une paroi de véhicule (12) de carcasse de véhicule (11), notamment d'un aéronef pour transporter des marchandises et des personnes, au moyen des moyens élastiques de découplage (25, 25a), **caractérisé en ce que** les moyens de fixation (27) ont de jeu par rapport aux éléments de montage (14) de manière que les éléments de montage (14) sont déplaçables relatifs à la paroi de véhicule (12).

2. Moyen de fixation selon la revendication 1, **caractérisé en ce que** les moyens élastiques de découplage (25, 25a) ont un lien opératoire avec les éléments de montage (14) d'une part moyennant des moyens de fixation (27) comportant une tige de boulon (31) et avec les points de fixation (15, 29) d'autre part, les éléments de montage (14) comportant des alésages (26) par lesquels les tiges de boulon (31) des moyens de fixation (27) passent avec un jeu par rapport à la paroi intérieure des alésages (26).

3. Moyen de fixation selon les revendications 1 et 2, **caractérisé en ce que** les moyens de fixation (27) peuvent être mis en lien opératoire avec les moyens élastiques de découplage (25, 25a) à travers des éléments de distribution de charges (34, 34a).

4. Moyen de fixation selon les revendications 1 à 3, **caractérisé en ce que** la flexibilité du ressort des moyens élastiques de découplage (25, 25a) à travers des éléments de distribution de charges (34, 34a) est réglable d'une manière variable au moyen des moyens de fixation (27).

5. Moyen de fixation selon les revendications 1 à 4, **caractérisé en ce que** les moyens élastiques de découplage (25, 25a) peuvent être reliés à travers les moyens de fixation (27) avec des éléments de maintien (22, 22a) qui peuvent être mis en lien opératoire avec des moyens de fixation (21) du côté du véhicule.

6. Moyen de fixation selon la revendication 5, **caractérisé en ce que** les éléments de maintien (22, 22a) comportent des mâchoires de maintien (33) avec lesquelles ils peuvent être mis en lien opératoire avec les moyens de fixation (21) du côté du véhicule.

7. Moyen de fixation selon les revendications 5 et 6, **caractérisé en ce que** les éléments de maintien (22, 22a) peuvent être arrêté et leur position peut être fixée moyennant des éléments de blocage (40).

8. Moyen de fixation selon l'une quelconque ou plusieurs des revendications précédentes, **caractérisé en ce que** d'autres éléments de maintien (22a) sont prévus, qui peuvent être mis en lien opératoire avec d'autres moyens de fixation (29), les autres moyens de fixation (29a) sont solidaires avec des tiges de boulon prolongées qui s'étendent avec un jeu à la paroi intérieure par des alésages (26) dans l'élément de montage (14) et peuvent être liés aux premiers éléments de maintien (22) de la carcasse de véhicule (11).

9. Moyen de fixation selon la revendication 8, **caractérisé en ce que** les autres éléments de maintien (22a) reposent sur des moyens élastiques de découplage (25) et en position de montage affleurent avec la face supérieure d'un élément de montage (14) installé résistant à la flexion.

10. Moyen de fixation selon les revendications 8 et 9, **caractérisé en ce qu'**aux autres moyens de fixation (29a) d'autres éléments de montage (35) peuvent être solidarisés sur une plaque balistique de protection (14) résistante à la flexion.

11. Moyen de fixation selon l'une quelconque ou plusieurs des revendications précédentes, **caractérisé en ce que** les moyens élastiques de découplage (25) sont placés en forme de point entre une plaque double (37) comportant une plaque supérieure (38) et une plaque inférieure (39) et les plaques doubles (37) peuvent être liées au moyen de moyens de fixation (27) avec des éléments de maintien (22, 22a) au côté de la carcasse.

12. Moyen de fixation selon l'une quelconque ou plusieurs des revendications précédents pour des éléments de montage (14) aux points de fixation (15) existants au côté de la carcasse d'une carcasse de véhicule (11) d'un véhicule (10), **caractérisé en ce que** les éléments de montage (14) sont des objets installés balistiques de protection, des revêtements protecteurs, des cadres de fixation ou de transport pour des appareils à transporter ou similaires.

13. Véhicule selon la revendication 12, **caractérisé en ce que** les éléments de montage (14) sont des plaques balistiques de protection à partir des agglomérés laminés, des composites, des aramides ou des polyéthylènes.

14. Véhicule selon la revendication 12 et 13, **caractérisé en ce que** les éléments de montage (14) peuvent être montés dans la carcasse de véhicule (11) à travers des moyens élastiques de découplage (25, 25a) aux rails au sol (18) du véhicule.

15. Véhicule selon la revendication 14, **caractérisé en ce que** les rails au sol (18) du véhicule sont liés élastiquement avec la carcasse de véhicule (11).

16. Véhicule selon les revendications 12 et 13, **caractérisé en ce que** les éléments de montage (14) sont liés avec la carcasse de véhicule (11) à travers des collages élastiques durables ou à travers des fermetures élastiques autoagrippantes à partir des rubans-velours et rubans-crochets.

17. Véhicule selon l'une quelconque ou plusieurs des revendications précédentes 1 à 11, **caractérisé en ce que** des fixations élastiques de charge externe (16) pour la réception des charges externes (17) sont prévues, les fixations élastiques de charge extérieure (16) étant déplaçables relatifs à la paroi respective du véhicule (12) avec amortissement tridimensionnel des vibrations.
